# DEMANDE DE BREVET EUROPEEN

(11) **EP 0 791 548 A2**
(43) Date de publication de la demande: **27.08.1997**
(21) Numéro de dépôt: 97440011.1
(22) Date de dépôt: 27.01.1997
(51) Int. Cl.: B65H 18/06, B65H 16/06, F16D 1/08

(54) **Dispositif d'automatisation de l'ouverture et de la fermeture d'un palier à bascule**

(30) Priorité: 25.01.1996 FR 9601032
(71) Demandeur: Guttin Christian Sàrl, 38490 Les Abrets (FR)
(72) Inventeur: La désignation de l'inventeur n'a pas encore été déposée
(74) Mandataire: Arbousse-Bastide, Jean-Claude Philippe

(57) **Abrégé**

Dispositif d'automatisation de l'ouverture et de la fermeture d'un palier à bascule du type comprenant en extrémité d'un axe mobile en rotation un volant basculable pour venir couvrir un siège dans lequel est déposé l'extrémité d'une barre enrouleuse.

I1 comporte un vérin (4) solidarisé sur le dessus du corps (10) du palier (1) de manière pivotante autour d'un axe (20) perpendiculaire à l'axe de rotation (12), et dont la tige (40) comporte à son extrémité une rotule (41) sur laquelle est monté un galet (42) qui se loge, en y étant retenu, dans une gorge périphérique (55) que comporte dans sa face arrière (51) le volant basculable (5) du palier (1).

## Description

La présente invention a pour objet un dispositif d'automatisation de l'ouverture et de la fermeture d'un palier à bascule.

Un palier à bascule est un palier destiné à porter l'une des extrémités d'une barre enrouleuse, en vue de l'enroulement ou du déroulement de nappes de matériaux, et comportant un siège obturable par basculement d'un volant.

Les paliers à bascule connus à ce jours comportent un axe mobile en rotation dans un corps fixe, dont une extrémité est solidarisée à un organe moteur et dont l'autre comprend d'une part un siège, généralement garni d'une pièce d'usure, et d'autre part un volant basculable autour d'un axe perpendiculaire à l'axe de rotation, apte venir couvrir l'extrémité, de section généralement carrée, de la barre enrouleuse déposée dans ledit siège, en vue du blocage de celle-ci.

En utilisation, l'extrémité de la barre enrouleuse est placée dans le siège, et le volant est basculé manuellement ou automatiquement dès le mouvement de rotation, le basculement dans le sens inverse permettant l'enlèvement de la barre enrouleuse.

Si la fermeture d'un palier peut être réalisée automatiquement, l'ouverture est nécessairement réalisée manuellement ce qui peut être une perte de temps.

On connaît déjà des dispositifs de palier à bascule à ouverture pneumatique, par exemple celui décrit dans le document DE-A-31 27 553, lequel comporte une pièce en forme d'étrier positionnée à cheval sur la jante du volant, et mobile en déplacement selon un axe parallèle à l'axe de rotation du palier, ladite pièce étant liée également au corps du palier par l'intermédiaire d'un vérin assurant ledit déplacement.

Ce dispositif présente toutefois des inconvénients, il nécessite en effet une forme particulière de la jante afin que l'étrier puisse s'y adapter quelle que soit la position du volant, en sorte que ce dispositif ne peut pas être monté sur tous les paliers existants qui doivent alors être remplacés.

D'autre part il se produit une usure de la jante du volant et de la partie interne de l'étrier, due au frottements du fait de la rotation à grande vitesse du volant.

La présente invention a pour but de remédier à ces divers inconvénients en proposant un dispositif d'automatisation de l'ouverture et de la fermeture d'un palier à bascule, susceptible d'être adapté sur les paliers existants, ne nécessitant donc pas le remplacement de ceux-ci.

Le dispositif objet de la présente invention se caractérise essentiellement en ce qu'il comporte un vérin solidarisé sur de dessus du corps du palier de manière pivotante autour d'un axe perpendiculaire à l'axe de rotation, et dont la tige comporte à son extrémité une rotule sur laquelle est monté un galet qui se loge, en y étant retenu, dans une gorge périphérique que comporte dans sa face arrière le volant basculable du palier.

En pratique l'adaptation du dispositif selon l'invention sur un palier existant nécessite d'une part la préparation du corps du palier pour permettre la fixation de la platine, et d'autre part le remplacement du volant existant par un autre comportant la gorge périphérique.

Les avantages et les caractéristiques de la présente invention ressortiront plus clairement de la description qui suit et qui se rapporte au dessin annexé, lequel en représente un mode de réalisation non limitatif.

Dans le dessin annexé:
- la figure 1 représente une vue en perspective, en éclaté et avec coupe partielle du dispositif selon l'invention.
- la figure 2 représente une vue schématique avec coupes partielles d'un palier à bascule fermé équipé du même dispositif.
- la figure 3 représente la même vue lorsque le palier à bascule est ouvert.
- la figure 4 représente une vue partielle en coupe d'une variante du dispositif selon l'invention.

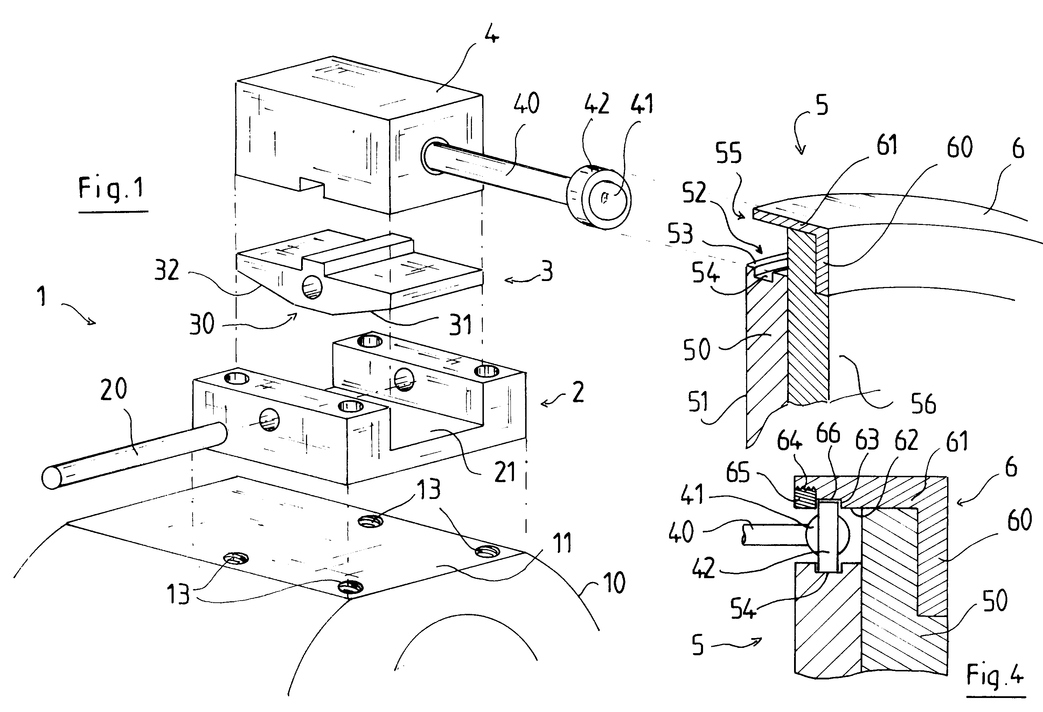

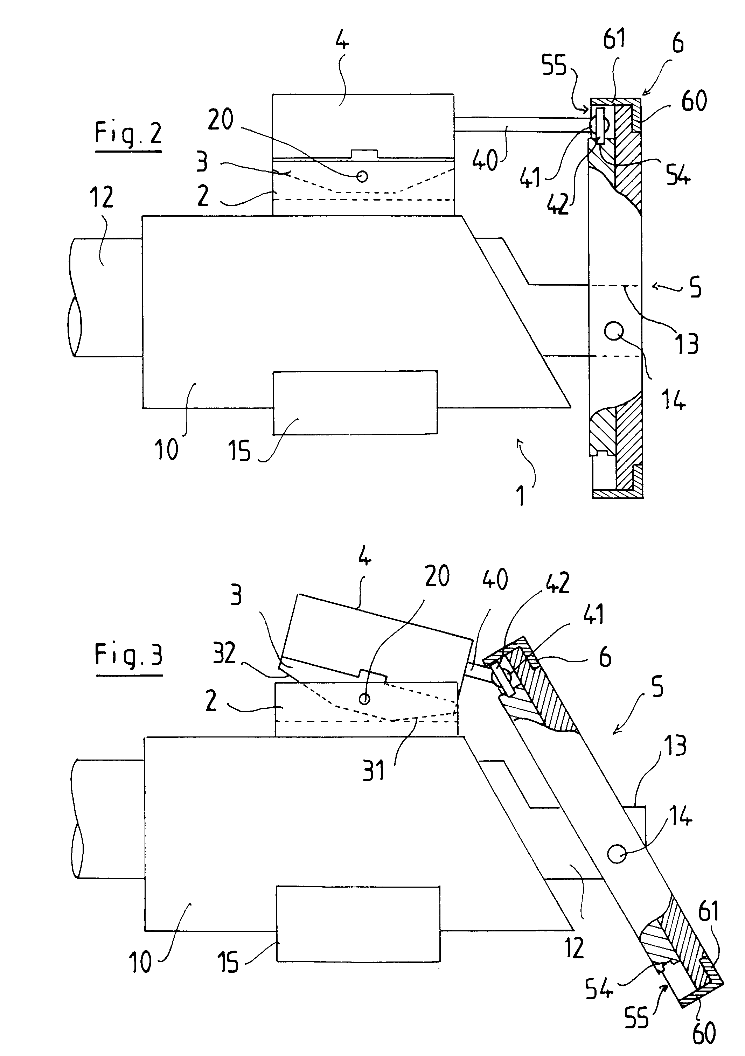

Si on se réfère aux figures 1 et 2 on peut voir le corps 10 d'un palier à bascule 1 sur le dessus duquel est pratiqué un méplat 11 afin de permettre la fixation par vissage d'une chape 2, de section transversale en U, traversée par un axe 20 perpendiculaire à l'axe de rotation 12 du palier, visible sur la figure 2, et dans laquelle est introduite une platine 3 montée pivotante autour de l'axe 20, un vérin pneumatique 4 étant solidarisé, par des moyens appropriés non représentés, à la platine 2.

Le palier 1 comporte, de manière connue, un volant 5 susceptible de basculer sur le siège 13 de l'axe 12 autour d'un axe 14, comme cela est visible sur la figure 2.

Le corps 50 du volant 5 comporte en périphérie dans sa face arrière 51 une feuillure 52 dont la paroi 53, perpendiculaire au plan du volant, comporte une rainure 54.

Un profilé annulaire 6, de section transversale en L dont une aile 60 est située dans un plan, l'autre 61 étant circulaire, est solidarisé au corps 50 du volant 5 pour créer, en association avec la feuillure 52, une gorge périphérique 55, c'est-à-dire que l'aile plane 60 est solidarisée, par vissage, à la face avant 56 du corps 50, tandis que l'aile circulaire 61 s'étend vers l'arrière perpendiculairement au plan du volant 5 et parallèlement à la paroi 53.

La tige 40 du vérin 4 comporte à son extrémité une rotule 41 à laquelle est solidarisée, avec possibilités de rotation et déplacements angulaires, un galet 42 destiné à être introduit dans la gorge 55, où il roule et est maintenu par la rainure 54 et l'aile 61 du profilé 6.

Si on se réfère maintenant à la figure 3 on peut voir que l'ouverture du palier 1 par basculement du volant 5 sur le siège 13 de l'axe 12 autour de l'axe 14, est obtenu par la rentrée de la tige 40 du vérin 4, ce qui est réalisable du fait du pivotement de la platine 3 autour de l'axe 20 et de la mobilité angulaire du galet 42 sur la rotule 41.

On remarquera que la face inférieure 30 de la platine 3, qui est à une certaine distance du fond 21 de la chape 2, comporte des parties avant 31 et arrière 32 biseautées, afin de faciliter le pivotement dans la chape 2 autour de l'axe 20, tout en réduisant l'encombrement de l'ensemble.

Le pivotement vers l'avant permet l'ouverture du palier 1, comme cela est visible sur la figure 3, tandis que le pivotement vers l'arrière permet de rattraper une éventuelle différence de niveau entre le vérin 4 et la gorge 42.

Il est à noter que le moyen d'entraînement de l'axe 12 du palier est de préférence asservi à un moyen d'indexage, une cellule par exemple, permettant l'arrêt de la rotation de l'axe 12 dans une position autorisant le basculement du volant 5.

L'équipement d'un palier existant au moyen du dispositif selon l'invention nécessite d'une part la réalisation du méplat 11 et d'orifices taraudés 13, visibles sur la figure 1, pour la fixation de la chape 2, et de remplacer le volant existant par un volant 5 comportant une gorge 55.

Il est à noter que le palier représenté est un palier solidarisable par l'intermédiaire d'un socle 15, et dans le cas d'un palier à flasque le vérin est positionné en avant du flasque sous le palier, le pivotement du vérin étant réalisé à l'arrière de celui-ci.

Si on se réfère maintenant à la figure 4 on peut voir que dans une variante, la paroi interne 62 de l'aile circulaire 61 du profilé 6 comporte sur tout le pourtour un épaulement 63 et dans sa partie extrême un taraudage 64 destiné à la solidarisation d'une bague 65 filetée extérieurement créant entre l'épaulement 63 et la bague 65, en regard de la rainure 54, une rainure 66 permettant également de retenir le galet 42.

## Revendications

1. Dispositif d'automatisation de l'ouverture et de la fermeture d'un palier à bascule du type comportant en extrémité d'un axe mobile en rotation un volant basculable pour venir couvrir un siège dans lequel est déposé l'extrémité d'une barre enrouleuse, caractérisé en ce qu'il comporte un vérin (4) solidarisé sur le dessus du corps (10) du palier (1) de manière pivotante autour d'un axe (20) perpendiculaire à l'axe de rotation (12), et dont la tige (40) comporte à son extrémité une rotule (41) sur laquelle est monté un galet (42) qui se loge, en y étant retenu, dans une gorge périphérique (55) que comporte dans sa face arrière (51) le volant basculable (5) du palier (1).

2. Dispositif selon la revendication 1 caractérisé en ce que le vérin (4) est solidarisé au corps (10) du palier par l'intermédiaire d'une platine (2) solidaire fixement dudit vérin (4) et montée pivotante dans une chape (3) par l'intermédiaire d'un axe (20), ladite chape étant fixée sur ledit corps (10).

3. Dispositif selon la revendication 1 ou la revendication 2 caractérisé en ce que la gorge (55) résulte d'une feuillure (52) pratiquée en périphérie dans la face arrière (51) du corps (50) du volant (5), associée à un profilé annulaire (6) de section transversale en L comprenant une aile plane (60) et une aile circulaire (61), l'aile plane (60) étant solidarisée, par vissage, à la face avant (56) du volant (5) tandis que l'aile circulaire (61) s'étend vers l'arrière perpendiculairement au plan dudit volant (5) en regard de ladite feuillure (52) dont la paroi (53) parallèle à ladite aile circulaire (61) comporte une rainure (54) dans laquelle roule le galet (42).

4. Dispositif selon la revendication 3 caractérisé en ce que la paroi interne (62) de l'aile circulaire (61) du profilé annulaire (6) comporte sur tout le pourtour un épaulement (63) et dans sa partie extrême un taraudage (64) destiné à la solidarisation d'une bague (65) filetée extérieurement, créant entre l'épaulement (63) et la bague (65), en regard de la rainure (54), une rainure (66) permettant également de retenir le galet (42).

5. Dispositif selon l'une quelconque des revendications précédentes caractérisé en ce que le moyen d'entraînement en rotation de l'axe (12) du palier (1) est asservi à un moyen d'indexage permettant l'arrêt de la rotation dudit axe (12) dans une position autorisant le basculement du volant (5).
